(19) **Europäisches Patentamt / European Patent Office / Office européen des brevets**

(11) **EP 2 128 866 A1**

(12) **EUROPEAN PATENT APPLICATION**

(43) Date of publication:
**02.12.2009 Bulletin 2009/49**

(51) Int Cl.:
***G11B 19/12*** (2006.01)

(21) Application number: **08157181.2**

(22) Date of filing: **29.05.2008**

<table>
<tr><td>

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **Deutsche Thomson OHG
30625 Hannover (DE)**
</td><td>

(72) Inventor: **Winter, Marco
30659, Hannover (DE)**

(74) Representative: **Thies, Stephan
Deutsche Thomson OHG
European Patent Operations
Karl-Wiechert-Allee 74
30625 Hannover (DE)**
</td></tr>
</table>

(54) **Method and apparatus for identifying a media type of an optical disk**

(57) The present invention relates to a method (800) of determining a media type of an optical storage medium that is used in an optical disk system. The optical storage medium has an information layer with equidistant tracks. A method according to the invention comprises generating (802) at least two beams of light having a common point of origin and projecting (804) the at least two beams onto the information layer of the optical storage medium. The method further comprises varying (806) a distance between the point of origin and the information layer and measuring (808) the occurrence of at least one relative maximum of the amount of light reflected from the information layer while the distance is being varied. Finally, the method (800) comprises deriving (810) the media type from the measured occurrence of the at least one maximum. Also according to the invention, optical storage systems perform the above method of determining the media type of the optical storage medium.

```
┌─────────────────────────────────────┐  802
│ Generate at Least Two Beams of Light │
│         Having a Common Point of     │
│                Origin                │
└─────────────────────────────────────┘
                   │
┌─────────────────────────────────────┐  804
│   Project the at Least Two Beams     │
│   Onto an Information Layer on an     │
│      Optical Storage Medium          │
└─────────────────────────────────────┘
                   │
┌─────────────────────────────────────┐  806
│   Vary the Distance Between the      │
│   Point of Origin and the            │
│         Information Layer            │
└─────────────────────────────────────┘
                   │
┌─────────────────────────────────────┐  808
│  Measure the Occurrence of at Least  │
│   One Relative Maximum of the        │
│   Amount of Light Reflective from    │
│   the Information Layer While the     │
│      Distance is Being Varied        │
└─────────────────────────────────────┘
                   │
┌─────────────────────────────────────┐  810
│  Derive the Media Type from the      │
│   Measured Occurrence of the at      │
│        Least One Maximum             │
└─────────────────────────────────────┘
```

800

**FIG. 8**

EP 2 128 866 A1

## Description

The present invention relates to the field of disk systems for use in computers. In particular, exemplary embodiments of the present invention relate to improving disk system performance by allowing rapid identification of a media type of an optical disk.

Currently available optical media come in a wide range of formats or media types. Available media types include CDs, DVDs, HD-DVDs and Blu-ray disks to name just a few examples. These media types are further separated into diverse categories like single layer and double layer and even hybrid disks.

When a user inserts a new disk into an optical disk drive, the drive needs to recognize the disk type to be able to read data stored on the disk. This recognition typically takes a relatively long time of several seconds or more. Optical drives are typically not capable of operation until the media type of an inserted disk is completely recognized.

Known recognition processes typically start by assuming that an inserted disk is one particular media type. If the drive is not able to read any sector after spinning up, then the disk is assumed to be a different media type. The drive tries to read sectors for the new media type. In so doing, additional time is needed to allow the drive to match the speed required for the media type currently being tried. This process continues until the media type is correctly identified. The process of identifying the correct media type may be lengthy and annoying to users because it delays the use of data stored on the optical disk by the user.

Japanese Patent Application Publication No. 2006209883 to Higashiyama et al. purports to disclose an optical pick-up unit for a blue laser and an optical pick-up unit for a red laser. The blue laser and the red laser simultaneously irradiate laser beams at an optical disk. The pick-up units receive the reflected light and output two detection signals, respectively. A control unit detects the system data of the optical disk from the two detection signals based on the reflection light and discriminates the kind of optical disk as digital versatile disk DVD or high definition DVD HD-DVD, based on the system data.

U.S. Patent No. 5,555,539 to Kamisada purports to disclose a system that includes a stationary section including a series of light sources and a movable section that is shiftable with respect to the stationary section for receiving parallel light beams generated by the light sources and for recording/reproducing data using the light beams. The light beams include two light beams having different respective wavelengths. The stationary section includes an optical section for emitting the light beams generated by the light sources. The optical axes of the light beams after being emitted from the stationary section are parallel to the shifting direction of the movable section. The movable section includes a wedge-shaped dichroic mirror for inclining the light beams with respect to each other to maintain a range of the light beams during movement by the movable section. The dichroic mirror has two surfaces angled with respect to each other and a common lens for converging the inclined light beams to form light spots at a number of positions respectively spaced by a predetermined distance. The first light beam has a wavelength that is passed by the first surface but reflected by the second surface toward the common lens. The second light beam has a wavelength that is reflected by the first surface toward the common lens. The first and second light beams overlap each other after reflection from the second and first surface.

Japanese Patent Application Publication No. 07230628 to Nakayama et al. purports to disclose a system in which an optical pickup device has a light source constituted by multiple semiconductor lasers which emit multiple beams. The emitted beams are made parallel by a collimator lens. The information is recorded or reproduced from an optical disk by forming a number of spots on its surface after passing the beams through a light beam splitter and an object lens respectively. A critical angle prism separates the beam further. A number of detectors are used to detect each beam separated by the critical angle prism.

The power of each beam is controlled independently, depending upon the result detected by the detectors.

U.S. Patent Application Publication No. 20060104186 to Takehiro purports to disclose an optical pickup apparatus that is **characterized in that** the optical pickup comprises a light emission part for emitting first and second laser beams having different wavelengths from each other, a grating for generating a pair of sub-beams from the laser beam emitted from the light emission part. A hologram generates plus and minus high-order beams from the laser beam reflected by a recording medium to guide the high-order beams to a light receiving part. The light receiving part comprises a pair of three-division light receiving elements for receiving the plus and minus high-order beam generated from the first or second laser beam reflected by the recording medium, respectively, to generate a focus error signal by a beam size method and two pairs of sub-beam light receiving elements provided by one pair with respect to each of a pair of the three-division light receiving elements. The two pairs of sub-beam light receiving elements receive the high-order beams generated from the sub-beams reflected by the recording medium to generate a tracking error signal by a three-beam method. Each of the three-division light receiving elements is divided into three light receiving regions by two parallel division lines, and the light emission part is placed so that a straight line connecting light emission points of the first and second light emission sources is parallel to the division lines of the three-division light receiving element.

An improved mechanism that provides relatively fast identification of a media type of an optical storage medium is desirable.

A method of determining a media type of an optical storage medium in accordance with the present invention is set forth in claim 1. According to the invention, the optical storage medium has an information layer with equidistant tracks. The method comprises generating at least two beams of light having a common point of origin and projecting the at least two beams onto the information layer of the optical storage medium. The method further comprises varying the distance between the point of origin and the information layer and measuring the occurrence of at least one relative maximum of the amount of light reflected from the information layer while the distance is being varied. Finally, the method comprises deriving the media type from the measured occurrence of the at least one maximum.

A method according to the invention may comprise determining a track pitch based on the at least one maximum. The media type may be derived prior to spin-up of the optical storage medium to a rate at which data is readable from the optical storage medium. The method may comprise placing a grid between the point of origin and the information layer of the optical storage medium. The grid may comprise gaps parallel to the equidistant tracks on the information layer of the optical storage medium so that the at least two beams appear in the form of a row of spots at right angles to the tracks. The grid may be created by switching on a transmissive, grid-shaped LCD in a beampath between the point of origin and the information layer.

A method according to the invention may comprise determining an angle at which the at least two beams strike the information layer. The at least one maximum may occur when the at least two beams fall on one of the blank areas between the equidistant tracks. Measuring the occurrence may comprise measuring the distance between the common point of origin and the information layer.

An optical disk system in accordance with the present invention is recited in claim 9. The optical disk system is adapted to read information from an optical storage medium having an information layer including equidistant tracks. The optical disk system comprises a laser that is adapted to generate a beam of light. A grid is adapted to separate the beam of light into at least two beams of light and to project the at least two beams onto the information layer of the optical storage medium. The optical disk system further comprises a controller that is adapted to vary the distance between the laser and the information layer, to measure the occurrence of at least one relative maximum of the amount of light reflected from the information layer while the distance is being varied, and to derive the media type from the measured occurrence of the at least one maximum.

In an optical disk system according to the invention, the controller may be adapted to determine the track pitch based on the at least one maximum. The controller may also be adapted to derive the media type prior to spin-up of the optical storage medium to a rate at which data is readable from the optical storage medium. The controller may additionally be adapted to cause the grid to be placed between the laser and the information layer of the optical storage medium. The grid may comprise gaps parallel to the equidistant tracks on the information layer of the optical storage medium so that the at least two beams appear in the form of a row of spots at right angles to the tracks. The grid may be created when the controller switches on a transmissive, grid-shaped LCD in a beampath between the laser and the information layer. Finally, the controller of the optical disk system may be adapted to determine an angle at which the at least two beams strike the information layer.

A preferred embodiment of the present invention is described with reference to the accompanying drawings. The preferred embodiment merely exemplifies the invention. Plural possible modifications are apparent to the skilled person. The gist and scope of the present invention is defined in the appended claims of the present application.

Fig. 1 is a block diagram of an optical disk drive system in accordance with an exemplary embodiment of the present invention.

Fig. 2 is a diagram that shows a signal characteristic when varying a distance between an optical disk and a grid in accordance with an exemplary embodiment of the present invention.

Fig. 3 is a diagram that shows a signal characteristic resulting from closely spaced layers on an optical disk in accordance with an exemplary embodiment of the present invention.

Fig. 4 is a diagram that shows generation of a maximum reflected signal from which track pitch may be determined in accordance with an exemplary embodiment of the present invention.

Fig. 5 is a diagram showing a shape of maxima on a disk layer surface in accordance with an exemplary embodiment of the present invention.

Fig. 6 is a diagram that is useful in explaining a calculation of track pitch of an optical disk in accordance with an exemplary embodiment of the present invention.

Fig. 7 is a diagram that is useful in explaining the use of a rotated grid that increases the distance of spots to be hit for a match in accordance with an exemplary embodiment of the present invention.

Fig. 8 is a process flow diagram showing a method of determining a media type of an optical medium in accordance with an exemplary embodiment of the present invention.

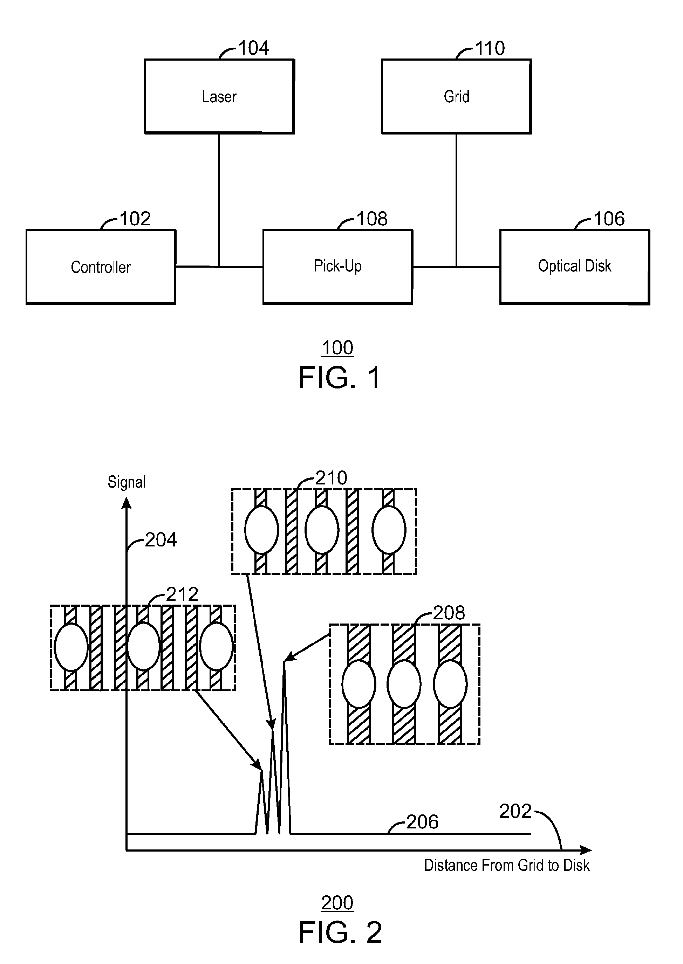

Fig. 1 is a block diagram of an optical disk drive system in accordance with an exemplary embodiment of the present invention. The optical disk drive system is generally referred to by the reference number 100. The skilled person will appreciate that the optical disk drive system 100 may comprise hardware elements including circuitry, software elements including computer code stored on a machine-readable medium or a combination of both hardware and software elements.

The optical disk system 100 includes a controller 102 that is adapted to control the overall operation of the system. A laser 104 is adapted to direct a beam of laser light onto an optical disk 106 disposed within the optical disk drive system 100. An optical pick-up 108 receives reflected light from the optical disk 106 and translates the reflected light energy into a signal corresponding to data stored on the optical disk 106.

In accordance with an exemplary embodiment of the present invention, a grid 110 is adapted to be positioned for movement between the laser 104 and the optical disk 106. The purpose of the grid 110 is to create a plurality of lighted spots on the surface of the optical disk 106. The controller 102 may be programmed to move the grid to vary the position of the lighted spots on the information layer of the optical disk 106. As fully set forth below, the pick-up 108 receives reflected light from the plurality of lighted spots. The controller 102 is adapted to use the information about the plurality of lighted spots to rapidly determine the media type of the optical disk 106. Moreover, the controller 102 may be adapted to determine whether the optical disk 106 is a CD, a DVD and HD-DVD or a Blu-ray disk to name just a few examples.

An exemplary embodiment of the present invention facilitates identification of the media type of the optical disk 106 during spin-up of the disk. Moreover, exemplary embodiments of the present invention do not require waiting until the disk is fully spun up to determine the media type. Disk spin-up and disk type recognition are performed in a single step

After the optical disk 106 is inserted into the optical disk system 100, a disk motor is started to ramp up rotation of the optical disk 106. The measurements described below are then quickly performed during this ramp up, so that speed of rotation of the optical disk 106 may be stabilized as soon as the correct speed for an optical disk of the determined type is reached.

When the initial spin-up starts, the grid 110 is positioned between the laser 104 and the optical disk 106. The grid 110 causes the laser beam produced by the laser 104 to be separated into a fan of diffraction beams or sub-beams that appear as a row of several light spots on the surface of the optical disk 106. In one exemplary embodiment of the present invention, the grid comprises gaps parallel to the track of the optical disk 106 so that the row of spots on the surface of the optical disk 106 is at right angles to the track. In another exemplary embodiment, the grid 110 may be created by switching on a transmissive, grid-shaped LCD in the beampath.

Since the sub-beams of the fan are divergent, the positioning of the light spots on the surface of the optical disk 106 varies depending on the distance between the gaps of the grid 110 and the distance between the grid 110 and the surface of the optical disk 106. A maximum reflection from the disk layer surface indicates that the spots fit ideally between the tracks.

The maximum reflection depends on the disk type, i.e. depends on the disk distance to the grid and the distance between two neighbor gaps of the grid. In an exemplary embodiment of the present invention, the total reflected light intensity is maximized when all the sub-beams hit one of the blank areas between data tracks on the disk. Moreover, reflected light intensity is less than maximized when the sub-beams do not fall entirely on the blank areas of the disk. The track pitch, which is the distance between tracks on the surface of the optical disk 106, can be deduced if the angle of the sub-beams is known. All sub-beams hit one of the blank areas when the distance "d" of the spots on the disk is an integer multiple of the track pitch "p". Among the several maxima of reflection this will cause, the maximum when the spot distance exactly equals the track pitch, i.e. when d=p, is expected to be the most pronounced one, because at larger distances between the grid and the disk, when the spot distance is a true multiple of the track pitch corresponding to d=np with n>1, the spots themselves will be bigger on the disk surface, and are assumed to cover more than just the blank areas between the information tracks.

In an exemplary embodiment of the present invention, the grid 110 is initially positioned sufficiently close to the optical disk 106 to ensure that the maximum reflected light will be obtained at a farther distance from the optical disk 106. The focus actuator of the optical drive system 100 is then monotonously moved away from the surface of the optical disk 106 under control of the controller 102. The total reflected light r received by the pick-up 108 is measured over time t. From this functional dependence r(t), the time of occurrence of a maximum, t1, is measured. With the focus actuator movement a(t) and the starting distance assumed to be known, the measured time t1 can be converted to a distance a1, from which the track pitch may be determined.

The track pitch may then be used to determine the media type of the optical disk 106 because the track pitch is different for different types of optical disks. In this manner, an exemplary embodiment of the present invention allows recognition of the media type of an optical disk during spin-up. Moreover, the media type may be identified before the disk is turning fast enough to read data for any given media type. Exemplary embodiments of the present invention allow fast track pitch detection because any disk rotation is sufficient to allow performance of the measurements needed to determine track pitch. Data readout capability is not required.

Fig. 2 is a diagram that shows a signal characteristic when varying a distance between an optical disk and a grid in accordance with an exemplary embodiment of the present invention. The diagram is generally referred to by the reference number 200. The diagram 200 shows an x-axis 202 that corresponds to a distance between the grid 110 and the optical disk 106. A y-axis 204 corresponds to signal strength of the light reflected from the surface of the optical disk 106 during performance of a method in accordance with an exemplary embodiment of the present invention. A plot 206 of the strength of reflected light is also shown.

The biggest maximum reflected light value corresponding to a spot pattern 208 indicates the media type of an associated optical disk. Previous local maxima corresponding to a spot pattern 210 and a spot pattern 212 can additionally be used for disk identification as a portion of the entire characteristic of the reflected light. The skilled person will appreciate that the real slope for individual disks may contain more or fewer maxima than shown here, depending on the sensitivity of the sensor of the pick-up 108 and the mechanical design and quality of the grid 110. In addition, the number and magnitude of the maxima may also depend on the spatial coherence of the laser 104. The varying amplitude of the maxima occurs because the spots on disk are ideally small and fall on one of the blank areas between written tracks only at the overall maximum. At the other maxima, the spots are bigger and include a portion of written track together with the blank areas.

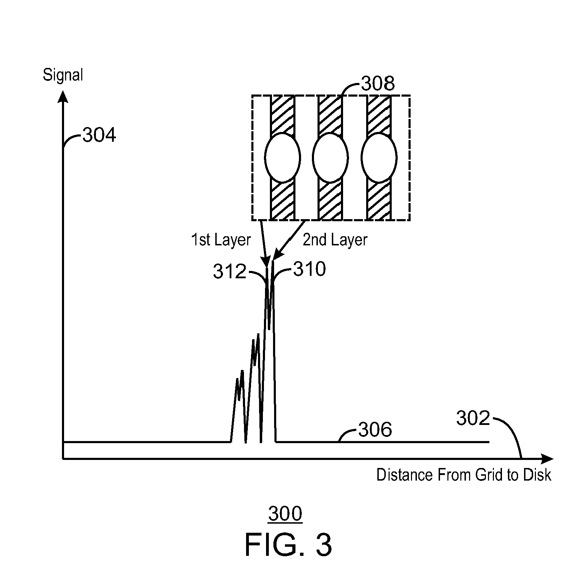

Fig. 3 is a diagram that shows a signal characteristic resulting from closely spaced layers on an optical disk in accordance with an exemplary embodiment of the present invention. The diagram is generally referred to by the reference number 300. The diagram 300 shows an x-axis 302 that corresponds to a distance between the grid 110 and the optical disk 106. A y-axis 304 corresponds to signal strength of the light reflected from the surface of the optical disk 106 during performance of a method in accordance with an exemplary embodiment of the present invention. A plot 306 of the strength of reflected light is also shown. In Fig. 3, the overall maxima corresponding to a spot pattern 308 is split into two closely spaced maxima 310 and 312. The presence of the two closely spaced maxima 310 and 312 indicates that the optical disk 106 contains two closely spaced layers. The two closely spaced layers indicate that the optical disk 106 is, for example, a dual layer DVD, dual layer Blu-ray disk, a dual layer HD-DVD or the like. Each of the two closely spaced maxima 310 and 312 correspond to one of the layers on the optical disk 106.

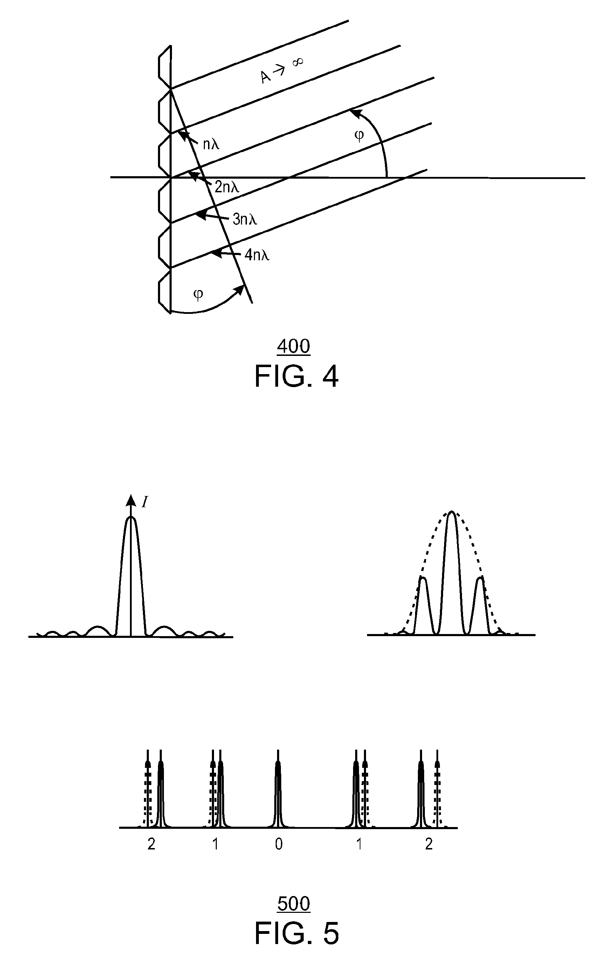

Fig. 4 is a diagram that shows generation of a maximum reflected signal from which track pitch may be determined in accordance with an exemplary embodiment of the present invention. The diagram is generally referred to by the reference number 400. For A tending to infinity, a maximum arises for those angles $\varphi$ where the length differences indicated in the figure are integer multiples of the wavelength $\lambda$.

Fig. 5 is a diagram showing a shape of maxima on a disk layer surface in accordance with an exemplary embodiment of the present invention. The diagram is generally referred to by the reference number 500. The shapes illustrated in the diagram 500 are based on an assumption that the disk rotation axis is parallel to the vertical axis denoted "l", and the radius of the disk is oriented along the horizontal axis.

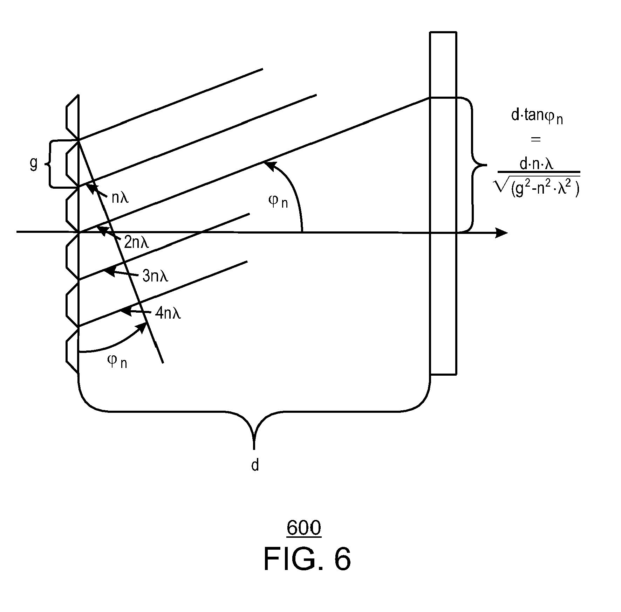

Fig. 6 is a diagram that is useful in explaining a calculation of track pitch of an optical disk in accordance with an exemplary embodiment of the present invention.

The diagram is generally referred to by the reference number 600. As shown in the diagram 600, the distances of the maxima from the absolute maximum result from the formula

$$d\,\tan\varphi_n = \frac{d \cdot n \cdot \lambda}{\sqrt{(g^2 - n^2 \cdot \lambda^2)}}\,.$$

The beams of the fan appearing behind the grid are described by this formula, where $n=0$ describes the center beam, $n=+-1$ describe the 1-st order refracted beams, $n=+-2$ the 2-nd order refracted beams and so on. Based on the relationship set forth above, the maxima of different order are not equidistant. Accordingly, it is desirable to evaluate the 0-th and 1-st order maxima. Given the geometry, the first maximum is situated at pitch $d1 \cdot \lambda / \sqrt{(g^2 - \lambda^2)}$, where $\lambda$ is the laser wave length, g is the grid constant, and d is the distance between grid and layer. For recognising the disk type, it can be determined whether maxima are measured at grid layer distances of $dn = \mathrm{Pitch}\,(\sqrt{g^2 - n^2 \cdot \lambda^2})\,/\,(n \cdot \lambda)$.

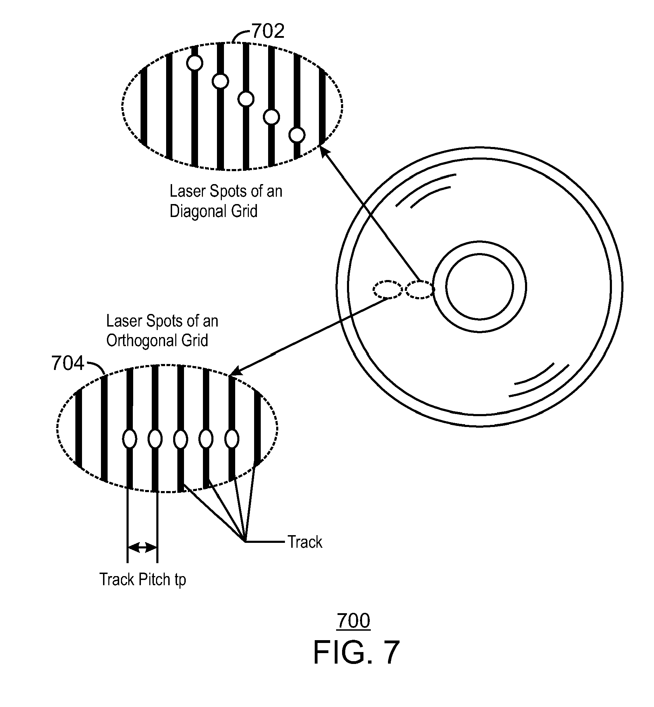

Fig. 7 is a diagram that is useful in explaining the use of a rotated grid that increases the distance of spots to be hit for a match in accordance with an exemplary embodiment of the present invention. The diagram is generally referred to by the reference number 700. The diagram 700 shows the use of a rotated grid for which the laser spot fan is not orthogonal to the tracks of the optical disk 106. Moreover, a spot pattern 702 is produced with a rotated grid while a spot pattern 704 is produced by an orthogonal grid. The use of the rotated grid increases the distance of the spots to be hit for the match of the main maximum, thereby allowing increased measuring accuracy.

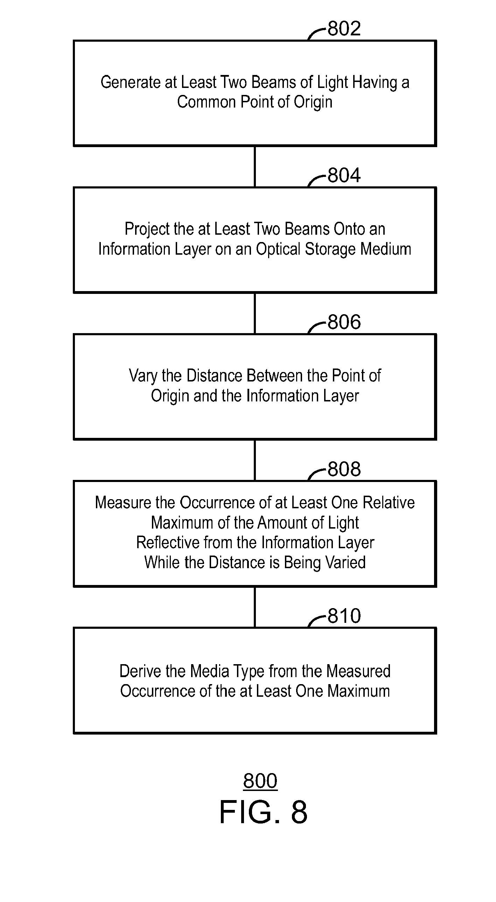

Fig. 8 is a process flow diagram showing a method of determining a media type of an optical medium in accordance with an exemplary embodiment of the present invention. The method is generally referred to by the reference number 800.

At step 802, at least two beams of light having a common point of origin are generated. The beams are projected onto an information layer of an optical storage medium 106 at step 804.

The distance between the point of origin and the information layer is varied, as shown at step 806. At step 808, the occurrence of at least one relative maximum of the amount of light reflected from the information layer is measured while the distance is being varied. Finally, the media type of the optical disk 106 is derived from the measured occurrence of the at least one maximum, as shown at step 810.

The skilled person will appreciate that combining any of the above-recited features of the present invention together may be desirable.

**Claims**

1. Method (800) of determining a media type of an optical storage medium (106) having an information layer with equidistant tracks separated by blank areas, the method comprising:

    - generating (802) at least two beams of light having a common point of origin;
    - projecting (804) the at least two beams onto the information layer of the optical storage medium (106);
    - varying (806) a distance between the point of origin and the information layer;
    - measuring (808) the occurrence of at least one relative maximum of the amount of light reflected from the information layer while the distance is being varied; and
    - deriving (810) the media type from the measured occurrence of the at least one maximum.

2. Method (800) according to claim 1, comprising determining a track pitch based on the at least one maximum.

3. Method (800) according to claims 1 or 2, wherein the media type is derived prior to spin-up of the optical storage medium (106) to a rate at which data is readable from the optical storage medium (106).

4. Method (800) according to any preceding claim, comprising placing a grid (110) between the point of origin and the information layer of the optical storage medium (106).

5. Method (800) according to claim 4, wherein the grid (110) comprises gaps parallel to the equidistant tracks on the information layer of the optical storage medium (106) so that the at least two beams appear in the form of a row of spots at right angles to the tracks.

6. Method (800) according to claim 4, comprising creating the grid (110) by switching on a transmissive, grid-shaped LCD in a beampath between the point of origin and the information layer.

7. Method (800) according to any preceding claim, comprising determining an angle at which the at least two beams strike the information layer.

8. Method (800) according to any preceding claim, wherein measuring the occurrence comprises measuring the distance between the common point of origin and the information layer.

9. Optical disk system (100) that is adapted to read information from an optical storage medium (106) having an information layer including equidistant tracks separated by blank areas, the optical disk system (100), comprising:

    - a laser (104) that is adapted to generate a beam of light;
    - a grid (110) that is adapted to separate the beam of light into at least two beams of light and to project the at least two beams onto the information layer of the optical storage medium (106);
    - a controller (102) that is adapted to vary a distance between the laser and the information layer, to measure the occurrence of at least one relative maximum of the amount of light reflected from the information layer while the distance is being varied, and to derive the media type from the measured occurrence of the at least one maximum.

10. Optical disk system (100) according to claim 9, wherein the controller (102) is adapted to determine the track pitch based on the at least one maximum.

11. Optical disk system (100) according to claims 9 or 10, wherein the controller (1020 is adapted to derive the media type prior to spin-up of the optical storage medium (106) to a rate at which data is readable from the optical storage medium (106).

12. Optical disk system (100) according to any of claims 9-11, wherein the controller (102) is adapted to cause the grid (110) to be placed between the laser (104) and the information layer of the optical storage medium (106).

13. Optical disk system (100) according to claim 12, wherein the grid (110) comprises gaps parallel to the equidistant tracks on the information layer of the optical storage medium (106) so that the at least two beams appear in the form of a row of spots at right angles to the tracks.

14. Optical disk system (100) according to claim 12, wherein the controller (102) is adapted to create the grid (110) by switching on a transmissive, grid-shaped LCD in a beampath between the laser (104) and the information layer.

15. Optical disk system (100) according to any of claims 9-14, wherein the controller (102) is adapted to determine an angle at which the at least two beams strike the information layer.

100

FIG. 1

200

FIG. 2

300

FIG. 3

400

FIG. 4

500

FIG. 5

$$d \cdot \tan\varphi_n = \frac{d \cdot n \cdot \lambda}{\sqrt{(g^2 - n^2 \cdot \lambda^2)}}$$

600

FIG. 6

702

Laser Spots of an
Diagonal Grid

Laser Spots of an
Orthogonal Grid

704

Track

Track Pitch tp

700
FIG. 7

```
                                                        802

  ┌──────────────────────────────────────────┐
  │                                            │
  │   Generate at Least Two Beams of Light     │
  │   Having a Common Point of Origin          │
  │                                            │
  │                                            │
  └──────────────────────────────────────────┘
                        │
                        │                      804
  ┌──────────────────────────────────────────┐
  │                                            │
  │   Project the at Least Two Beams Onto an   │
  │   Information Layer on an Optical Storage  │
  │   Medium                                   │
  │                                            │
  └──────────────────────────────────────────┘
                        │
                        │                      806
  ┌──────────────────────────────────────────┐
  │                                            │
  │   Vary the Distance Between the Point of   │
  │   Origin and the Information Layer          │
  │                                            │
  │                                            │
  └──────────────────────────────────────────┘
                        │
                        │                      808
  ┌──────────────────────────────────────────┐
  │   Measure the Occurrence of at Least One   │
  │   Relative Maximum of the Amount of Light  │
  │   Reflective from the Information Layer     │
  │   While the Distance is Being Varied       │
  └──────────────────────────────────────────┘
                        │
                        │                      810
  ┌──────────────────────────────────────────┐
  │                                            │
  │   Derive the Media Type from the Measured  │
  │   Occurrence of the at Least One Maximum   │
  │                                            │
  └──────────────────────────────────────────┘
```

800

# FIG. 8

**European Patent Office**

**EUROPEAN SEARCH REPORT**

Application Number

EP 08 15 7181

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 6 072 758 A (TAJIRI TAKASHI [JP]) 6 June 2000 (2000-06-06) * the whole document * ----- | 1,9 | INV. G11B19/12 |
| A | US 2008/080345 A1 (HASEGAWA SHINICHI [JP]) 3 April 2008 (2008-04-03) * the whole document * ----- | 1,9 | |

TECHNICAL FIELDS SEARCHED (IPC)

G11B

The present search report has been drawn up for all claims

| Place of search | Date of completion of the search | Examiner |
|---|---|---|
| The Hague | 7 July 2008 | Benfield, Alan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 08 15 7181

This annex lists the patent family members relating to the patent documents cited in the above-mentioned European search report.
The members are as contained in the European Patent Office EDP file on
The European Patent Office is in no way liable for these particulars which are merely given for the purpose of information.

07-07-2008

| Patent document cited in search report | | Publication date | Patent family member(s) | | Publication date |
|---|---|---|---|---|---|
| US 6072758 | A | 06-06-2000 | JP | 3753267 B2 | 08-03-2006 |
| | | | JP | 10134496 A | 22-05-1998 |
| US 2008080345 | A1 | 03-04-2008 | JP | 2008108406 A | 08-05-2008 |
| | | | KR | 20080029860 A | 03-04-2008 |

EPO FORM P0459

For more details about this annex : see Official Journal of the European Patent Office, No. 12/82

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006209883 B, Higashiyama
- US 5555539 A, Kamisada
- JP 07230628 B
- US 20060104186 A, Takehiro